# EUROPEAN PATENT SPECIFICATION

(11) **EP 2 044 463 B1**
(45) Date of publication and mention of the grant of the patent: **15.01.2020**
(21) Application number: 07784679.8
(22) Date of filing: 25.07.2007
(51) Int. Cl.: G01T 5/02, G01N 21/88

(54) **A METHOD OF AUTOMATICALLY COUNTING FISSION TRACKS**
VERFAHREN ZUM AUTOMATISCHEN ZÄHLEN VON SPALTUNGSSPUREN
PROCÉDÉ DE COMPTAGE AUTOMATIQUE DE TRACES DE FISSION

(30) Priority: 25.07.2006 US 832957 P
(43) Date of publication of application: 08.04.2009
(73) Proprietor: The University of Melbourne, Parkville, VIC 3052 (AU)
(72) Inventor: GLEADOW, Andrew John Ward, Melbourne , Victoria 3010 (AU)
(74) Representative: Hoarton, Lloyd Douglas Charles
(86) International application number: PCT/AU2007/001033
(87) International publication number: WO 2008/011674

(56) References cited:
- WO-A1-02/40970
- US-A- 4 900 935
- US-A- 4 925 298
- US-A- 5 267 274
- US-A- 5 267 274
- Robert L Fleischer ET AL: "Nuclear Tracks in Solids - Principles and Applications", , 1 January 1975 (1975-01-01), XP55319755, Retrieved from the Internet: URL:http://www.ion-tracks.de/nuc/ [retrieved on 2016-11-15]
- GLEADOW A.J.W. ET AL.: 'Fully-automated counting for fission track dating and thermochronology' GEOCHIMICA ET COSMOCHIMICA ACTA SUPPLEMENT vol. 70, no. 18, August 2006, page A205, XP025236597

## Description

### FIELD OF THE INVENTION

This invention relates to a computer-implemented method of detecting fission tracks in a crystal. The invention also relates to a computer software program for detecting fission tracks in a crystal.

### BACKGROUND OF THE INVENTION

Natural crystals of minerals such as mica, apatite and zircon contain trace amounts of the isotope U²³⁸, which undergoes radioactive decay by spontaneous nuclear fission with a half life of 10¹⁶ years. The resulting charged fission fragments disrupt the crystal lattice as they travel through it, leaving a trail of radiation damage known as a fission track of a characteristic width of approximately 10 nanometers and a characteristic length of up to 20 micrometers. Because the decay rate of U²³⁸ is constant, knowing the fission track density and the U²³⁸ content of a crystal allows a geological age to be estimated.

The damaged lattice slowly repairs itself upon exposure to elevated temperatures causing the fission tracks to fade and shorten. The rate of repair increases with temperature. Consequently, the number of tracks that intersect a surface of a crystal and the distribution of their lengths are dependent on the thermal history of the crystal. The fission track age of a geological sample can be estimated by counting the number of fission tracks per unit area on a suitable crystal surface, a quantity known as the fission track density. After independently measuring its U²³⁸ concentration, the thermal history of a sample can be reconstructed by combining the fission track age and the track length distribution.

Crystals of uranium-bearing minerals, such as apatite, occur widely in many common rock types, allowing the thermal history or geological age of the rocks hosting these crystals to be determined. Determining the thermal history of geological samples is important in many areas of economic endeavour, such as, the exploration for oil and diamonds. The determination of thermal histories is also important for fundamental geological studies of scientific interest. Determination of the fission track age, based on the measured fission track density, is a critical step in these applications.

Currently the fission track density in a crystal is determined by a highly skilled operator viewing the crystal under a microscope in transmitted light A crystal containing fission tracks is prepared by first extracting it from the host rock sample, mounting them in a suitable medium and then grinding and polishing an optically flat surface Fission tracks crossing the surface are then enlarged to optical dimensions (1-2 micrometers diameter) by etching the polished surface using a suitable chemical agent, such as nitric or hydrofluoric acid. The etched fission tracks are then revealed as surface voids intersecting the surface that can be observed using a high quality, but largely conventional, light microscope. The operator moves the focal plane of the microscope through the crystal, following a void from the surface into the crystal bulk and thus confirming that the visual feature is due to a surface void located where an etched fission track was and not some artefact due to surface dust or a crystal defect. The manual counting of fission tracks is a slow and laborious process, compounded by the requirement that many tracks be counted, typically up to 1000, to reduce the statistical track count error. Manual track counting is therefore time consuming and expensive.

Conventional methods for revealing nuclear tracks in solids are described in Robert L Fleischer ET AL: "Nuclear Tracks In Solids - Principles and Applications", 1 January 1975 (1975-01-01), EXP55319755, URL:http://www.ion-tracks.de/nuc/.

### SUMMARY OF THE INVENTION

According to one aspect of the present invention, there is provided a method as defined in claim 1 hereinafter.

According to another aspect of the present invention, there is provided a computer software program as defined in claim 7 hereinafter.

### BRIEF DESCRIPTION OF THE FIGURES

In order that the nature of the present invention may be more clearly understood, a preferred embodiment thereof will now be described with reference to the accompanying drawings in which:
Figure 1 is a schematic illustration of a preferred embodiment of a method of detecting fission tracks in a crystal.
Figures 2a to 2d are images of fission tracks in a crystal, the images being used in the method of figure 1;
Figure 3 is a series of conventional images of fission tracks that demonstrate their unsuitability for automated dctcction of fission tracks;
**Figure 3a** illustrates a histogram of brightness levels obtained from an image of fission tracks for calculating the threshold used to reduce the image colour depth;
**Figures 4a to 4c** are visualised outputs of a computer program for detecting fission tracks;
**Figure 5** demonstrates the agreement between the conventional method of detecting a fission track and the method disclosed here; and
**Figure 6** schematically depicts the formation of spurious visual features when imaging shallow fission tracks.

### DETAILED DESCRIPTION OF THE PREFERRED EMBODIMENT

The following embodiment of the invention can be applied to the task of automatically counting the fission track density in a prepared crystal. The fission tracks are first made visible under an optical microscope by the known steps of polishing the sample and revealing the fission tracks by etching the polished crystal in acid to create surface voids. It will be appreciated however, that other embodiments of the invention can be used for detecting many other types of micro or macroscopic surface voids in many different transparent solids of arbitrary thickness.

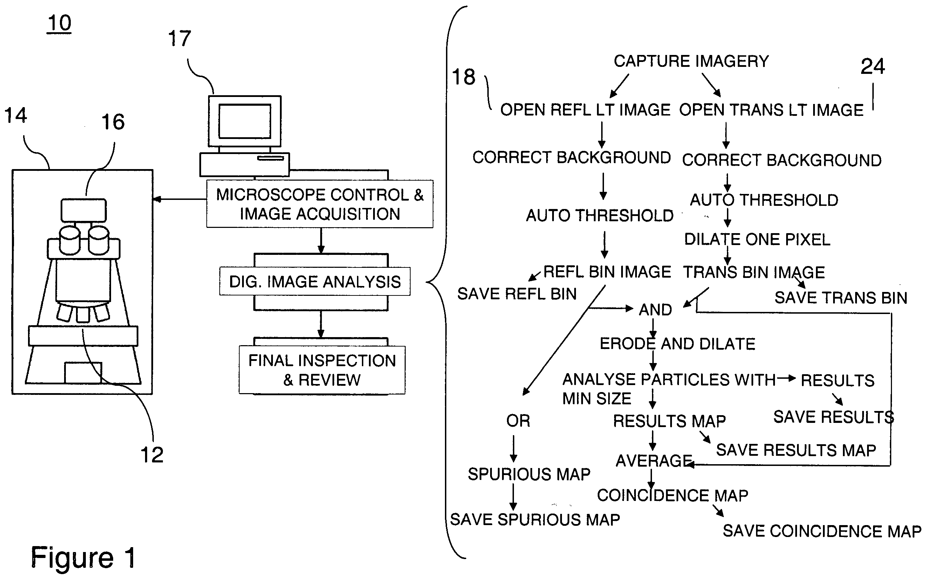

In one embodiment of the invention, generally shown as 10 in figure 1, the prepared crystal 12 is placed under an optical microscope 14. A suitable microscope is, for example, a Zeiss™ Axiotron™ with white light illumination of the samples. The microscope 14 may have a motorised stage and focus mechanism, motorised objective nosepiece and light source shutters. A physik instrumente™ piezoelectric microscope objective nano focusing device, for example, can aid in the focusing of the microscope. The motorised stage and focusing motor are used for preliminary positioning of the crystal 12 to previously labelled points of interest. The piezoelectric microscope objective nano focusing device can then be used for precise control of focusing using an Olympus™ Color View™ 1 CCD digital microscope camera with 3.3 megapixel resolution.

Two images are captured by a charged coupled device (CCD) 16 attached to the microscope 14.

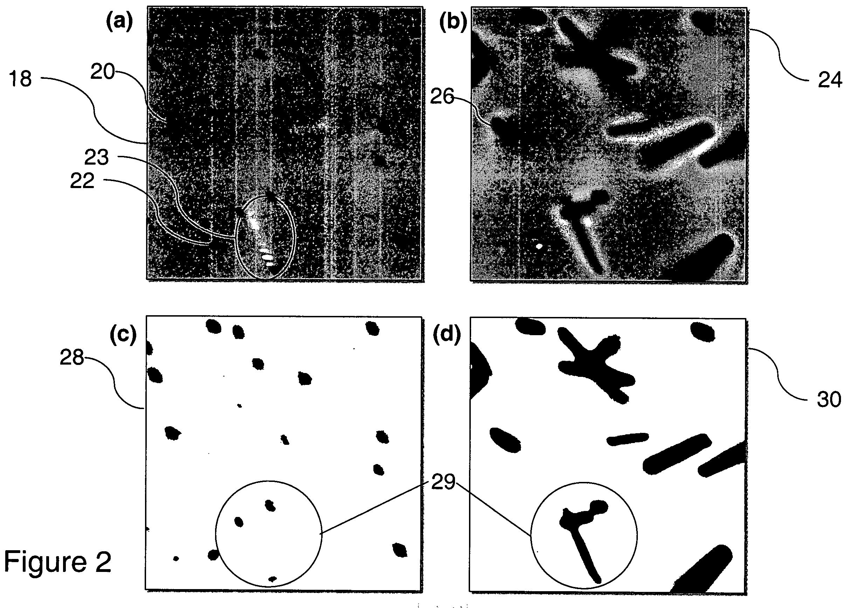

The first or reflected light image 18 is of the surface of the crystal 12, the light captured by the CCD 16 having been reflected from the crystal surface. An example of such an image 18 is shown in figure 2a. The reflected light image 18 is a RGB image of a prepared crystal of mica 12 containing surface voids corresponding to the etched fission tracks. The dark feature 20 is a typical opening of a surface void. There are many similar features in the image 18, however some of these, such as 22, are caused by something other than an opening of a surface void, for example, a dust particle or scratch. Generally, it is difficult or impossible to differentiate a surface void from a non-surface void feature, such as 22, in the reflected light image alone.

The second or transmitted light image 24 such as that shown in figure 2b is of a plane near the surface of the crystal 12, the plane preferably being 1.0 micrometers in front of the crystal surface. However, the distance between the crystal surface and the image plane can vary from 0.5 to 2 micrometers. The light captured to form the second or transmitted light image has passed or been transmitted through the crystal. The image is called a 'stepback' image by the inventors.

The transmitted light image 24 is otherwise generally the same view as the reflected light image 18. The dark feature 26 is formed by the presence of a surface void in the crystal. There are many similar features in the image 24, however, sometimes dark features are caused by something other than the surface void, for example, a fluid inclusion, polishing artifact or dislocation.

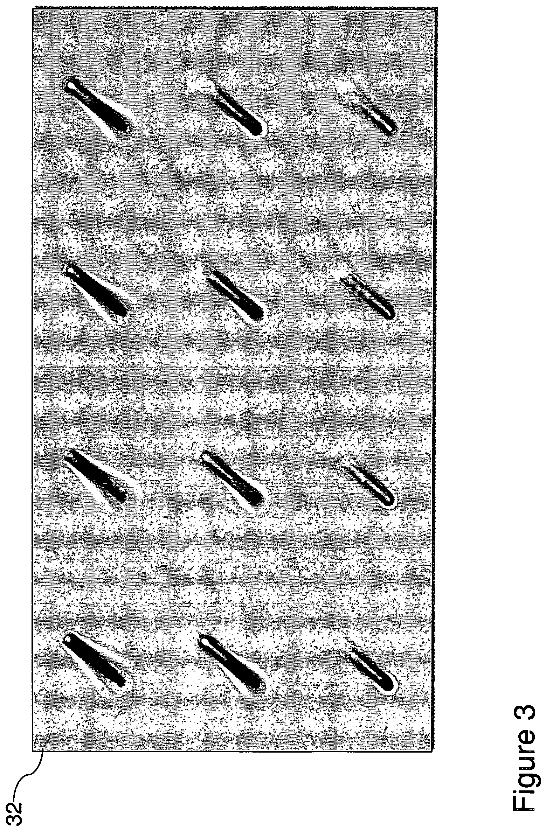

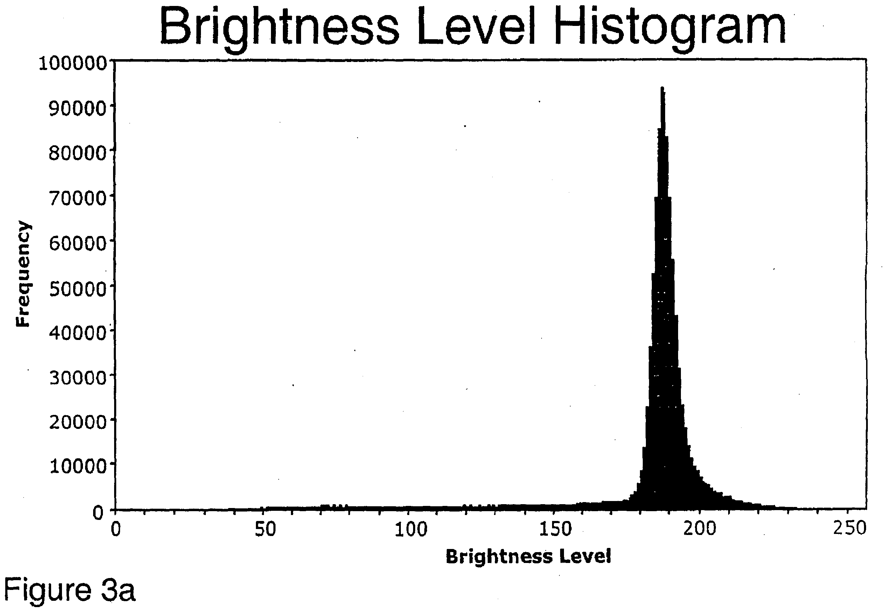

The series of images 32 in figure 3 demonstrates why it is desirable to form the transmitted light image by imaging a plane above a crystal surface instead of at or beneath the crystal surface. This series of images is of a single fission track void as the focal plane is moved through the crystal. It can be seen that the imaged void is not a solid feature but rather the axis tends to be lighter compared to the edges. This is caused by a refractive effect of the void. This undesirable effect interferes with the automated processing of the images by a computer 17 because computers generally require geometrically simple and preferably images of 1 bit colour depth. It has been found by the inventors that this undesirable feature is eliminated in the transmitted light image 24 in figure 2b by imaging a plane in front of the crystal surface.

A fission track void can be detected by comparing the reflected light 18 and the transmitted light 24 images of figure 2a and 2b, respectively. A visual feature, such as 20, in the reflected light image 18 that shares a common area with a visual feature, such as 26, in the transmitted light image 24 is very likely to be a fission track void. Visual features that appear in one image but not the other, can be rejected. This comparison of the reflected light and the transmitted light images is best achieved using a computer software program, although this can also be done by a person comparing the images side by side or visually superimposing one on top of the other.

Instructions contained in one embodiment of the program are described generally below, and shown as a flowchart 15 in figure 1. As shown in figure 1, a software program on a computer 17 loads the reflected light 18 and transmitted light 24 images taken by the CCD 16. The program then reduces the colour depth of the images to 1 bit by assigning all pixels below a certain brightness threshold to 0 and those above to 1. A variable threshold routine was written specifically for this task by the inventors. The routine utilises the particular characteristics of the histogram of brightness levels typical of both the reflected and transmitted light images, such as shown in figure 3a. The most obvious feature of the histogram in the approximately Gaussian peak of brightness levels representing the background. A threshold value for segmenting the image into foreground and background colours is selected to lie three standard deviations below the mean of the background peak.

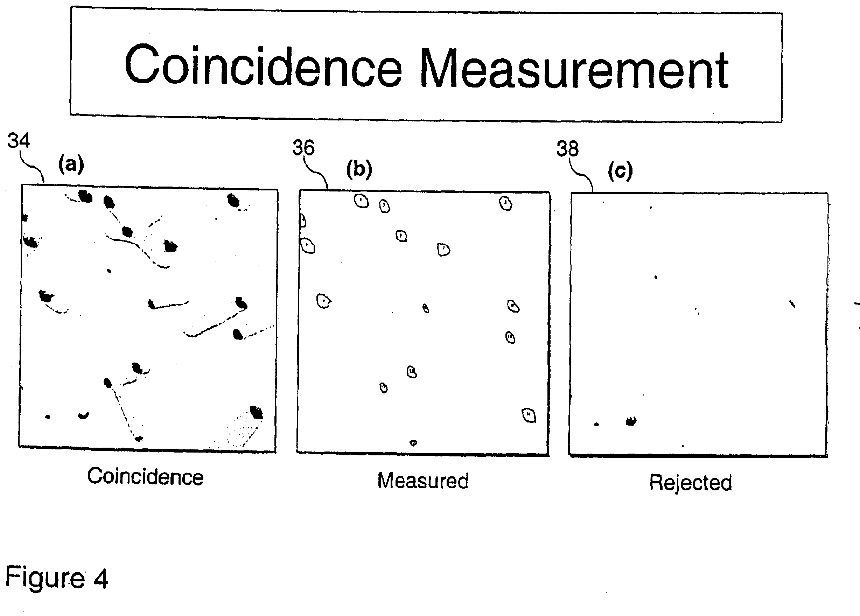

The 1 bit colour depth reflected 28 and transmitted 30 light images are shown in figures 2c and 2d, respectively. Reducing the colour depth to 1 bit allows logical operations to be performed on the images. The computer 17 then performs logical AND operations between corresponding pixels from each image to form a coincidence map. The left picture 34 in figure 4a shows the overlap of the reflected light and transmitted light 1 bit colour depth images corresponding to the images in figures 2c and 2d. The middle picture 36 of figure 4b shows the coincidence map identifying the positions of the surface voids and the right picture 38 of figure 4c shows the rejected visual features that are not due to surface voids. The computer counts the regions in the coincidence map 36 to count the number of surface voids.

It will be appreciated that the use of a crystal surface image allows the counting of surface voids in crystals that have fission track densities far greater than could be counted manually. This is largely because the image of the opening of the surface void has a much smaller area than the image of the whole surface void formed when the crystal is viewed in transmitted light. Surface voids are easily resolved in a crystal surface image even when they overlap in the image of the crystal in transmitted light. This latter type of image is used in the manual counting method. The circled regions 29 in figures 2c and 2d show well resolved surface voids in the first image 28 which are not resolved in the second image 30. Fission track densities up to 1 x 10⁸ cm⁻² can be counted using the method disclosed here whereas the practical limit for manual counting is 1 x 10⁷ cm⁻².

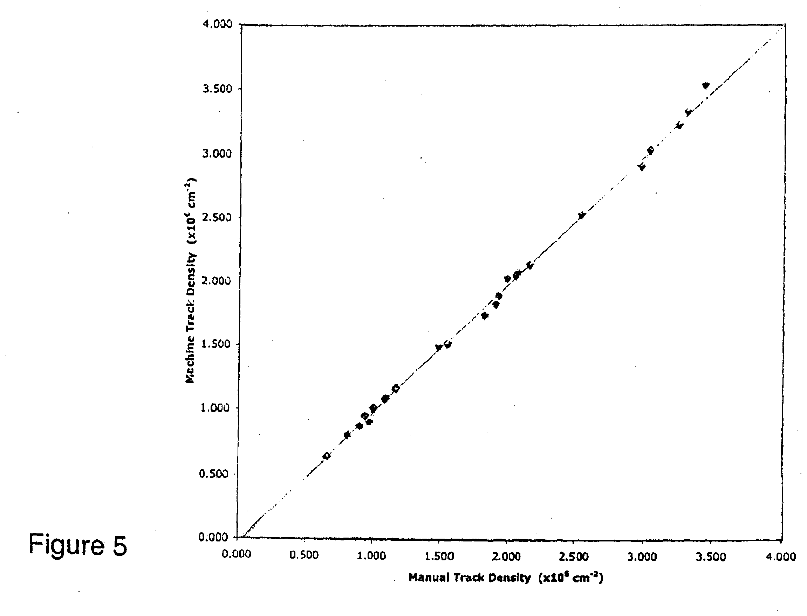

Figure 5 shows the excellent agreement between the manual counting of fission tracks in a sample crystal with automated counting using the method disclosed here and implemented using a computer.

In some cases, especially if the sample has a higher fission track density, the coincidence map will have abutting or partially merged features that are not resolved. In this case, the number of fission tracks represented by non-resolved abutting or possibly partially merged features can be estimated by dividing the total area of the abutting or partially merged features by the average area of a resolved surface void.

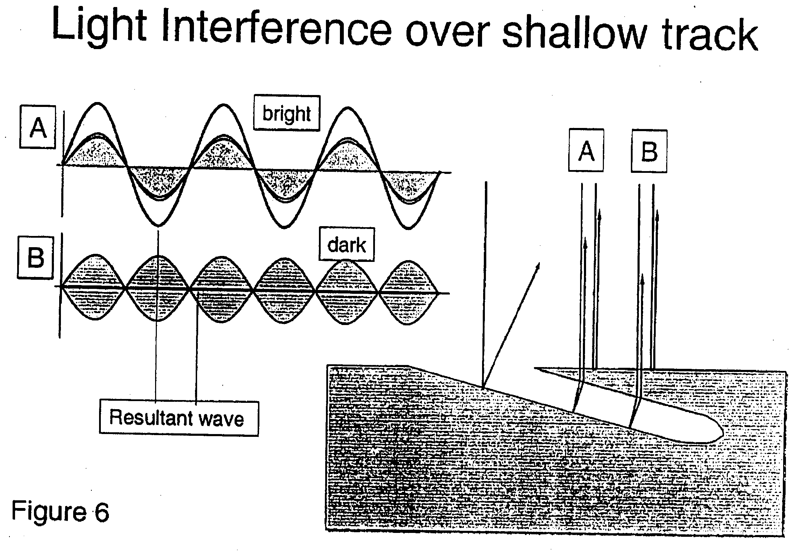

Sometimes a fission track makes a shallow angle to the crystal surface. In this case, the reflected light image of the crystal surface contains bright artefacts, such as 23 in figure 2a, that are due to optical interference of light waves reflected off the boundaries defining the surface void, a process schematically depicted in figure 6. These artefacts have a "zebra striped" appearance due to alternating zones of constructive and destructive interference along their length. For some of these tracks the first and brightest band overlaps the dark feature of the surface void and obscures it so that the track is not detected by the above method. Such tracks make up a very small proportion of the total, usually less than 5%, but can themselves be detected by a further step in the program. In this step the reflected light image is either captured at a plane focussed above the surface, or may be digitally blurred so that the individual bands are no longer resolved. The bright features are then detected by reducing the images to 1 bit colour depth using a threshold value above the background peak. A similar coincidence method to the normal procedure is then used to overlap these features with the transmitted light image thereby detecting those bright features previously overlooked. Those fission tracks not previously detected are then added to those detected by the previous coincidence mapping to provide a corrected track density.

It will be appreciated by persons skilled in the art that numerous variations and/or modifications may be made to the invention as shown in the specific embodiment without departing from the scope of the invention as is defined solely by the appended claims. For example, instead of light radiation, x-ray, particle radiation may be used for some solid samples. Furthermore, the crystal may be some other solid such as an engineering structure and the surface void may be a fault in the engineering structure. The present embodiments are, therefore, to be considered in all respects as illustrative and not restrictive.

## Claims

1. A method of detecting a fission track in a mineral crystal, the method comprising: capturing light reflected from a surface of the crystal to produce a digital reflected light image; imaging a plane in front of the surface with light transmitted through the crystal to produce a digital transmitted light image; and comparing the reflected light image and the transmitted light image to detect the fission track.

2. The method of claim 1, wherein imaging the plane in front of the surface of the crystal includes imaging a plane 0.5 to 2 micrometers in front of the surface of the crystal.

3. The method of claim 1, wherein imaging the plane in front of the surface of the crystal includes imaging a plane 1.0 micrometer in front of the surface of the crystal.

4. A method of any preceding claim, wherein comparing the reflected light and the transmitted light images to detect the fission track includes matching a visual feature in the reflected light image with a visual feature in the transmitted light image or vice versa, the visual features sharing a common area.

5. A method as claimed in claim 1 including the step of performing a logical AND operation between corresponding pixels from the reflected light image and the transmitted light image.

6. A method as defined in any one of the preceding claims, wherein imaging a plane in front of the surface of the crystal involves imaging with white light.

7. A computer software program for detecting a fission track in a mineral crystal, the program comprising instructions which, when the program is executed on a computer, cause the program to carry out the steps of: loading a reflected light image produced by the capture of light reflected from a surface of the crystal; loading a transmitted light image produced by imaging a plane in front of the surface with light transmitted through the crystal; and comparing the reflected light and the transmitted light images to detect the fission track.

8. The computer software program of claim 7, wherein the transmitted light image is produced by imaging a plane 0.5 to 2 micrometers in front of the surface of the crystal.

9. The computer software program of claim 7, wherein the transmitted light image is produced by imaging a plane 1.0 micrometer in front of the surface of the crystal.

10. The computer software program of claim 7, wherein the instructions for comparing the reflected light and the transmitted light images include instructions for matching a visual feature in the reflected light image with a visual feature in the transmitted light image or vice versa, the visual features sharing a common area.

11. A computer software program as defined in claim 7 wherein the instructions for comparing the reflected light and the transmitted light images include instructions for reducing the colour depth of the images to 1 bit.

12. A computer software program as defined in claim 11 wherein the instructions for comparing the two images include instructions for performing a logical AND operation between a corresponding pixel from each image.

## Patentansprüche

1. Verfahren zum Erkennen einer Spaltspur in einem Mineralkristall, wobei das Verfahren Folgendes beinhaltet: Erfassen von Licht, das von einer Oberfläche des Kristalls reflektiert wird, um ein digitales Auflichtbild zu erzeugen; Abbilden einer Ebene vor der Oberfläche mit Licht, das durch den Kristall fällt, um ein digitales Durchlichtbild zu erzeugen; und Vergleichen des Auflichtbildes und des Durchlichtbildes, um die Spaltspur zu ermitteln.

2. Verfahren nach Anspruch 1, wobei das Abbilden der Ebene vor der Oberfläche des Kristalls das Abbilden einer Ebene 0,5 bis 2 Mikrometer vor der Oberfläche des Kristalls beinhaltet.

3. Verfahren nach Anspruch 1, wobei das Abbilden der Ebene vor der Oberfläche des Kristalls das Abbilden einer Ebene 1,0 Mikrometer vor der Oberfläche des Kristalls beinhaltet.

4. Verfahren nach einem vorherigen Anspruch, wobei das Vergleichen der Auflicht-und der Durchlichtbilder zum Erkennen der Spaltspur das Abstimmen eines visuellen Merkmals im Auflichtbild mit einem visuellen Merkmal im Durchlichtbild oder umgekehrt beinhaltet, wobei die visuellen Merkmale eine gemeinsame Fläche haben.

5. Verfahren nach Anspruch 1, das den Schritt des Durchführens einer logischen UND-Verknüpfung zwischen entsprechenden Pixeln von dem Auflichtbild und dem Durchlichtbild beinhaltet.

6. Verfahren nach einem der vorherigen Ansprüche, wobei das Abbilden einer Ebene vor der Oberfläche des Kristalls das Abbilden mit Weißlicht beinhaltet.

7. Computersoftwareprogramm zum Ermitteln einer Spaltspur in einem Mineralkristall, wobei das Programm Befehle umfasst, die bei Ausführung des Programms auf einem Computer bewirken, dass das Programm die folgenden Schritte ausführt:
Laden eines Auflichtbildes, das durch das Erfassen von Licht erzeugt wird, das von einer Oberfläche des Kristalls reflektiert wird; Laden eines Durchlichtbildes, das durch das Abbilden einer Ebene vor der Oberfläche mit Licht erzeugt wird, das durch den Kristall fällt; und Vergleichen der Auflicht- und der Durchlichtbilder, um die Spaltspur zu erkennen.

8. Computersoftwareprogramm nach Anspruch 7, wobei das Durchlichtbild durch Abbilden einer Ebene 0,5 bis 2 Mikrometer vor der Oberfläche des Kristalls erzeugt wird.

9. Computersoftwareprogramm nach Anspruch 7, wobei das Durchlichtbild durch Abbilden einer Ebene 1,0 Mikrometer vor der Oberfläche des Kristalls erzeugt wird.

10. Computersoftwareprogramm nach Anspruch 7, wobei die Befehle zum Vergleichen der Auflicht- und der Durchlichtbilder Befehle zum Abstimmen eines visuellen Merkmals im Auflichtbild mit einem visuellen Merkmal im Durchlichtbild oder umgekehrt beinhalten, wobei die visuellen Merkmale eine gemeinsame Fläche haben.

11. Computersoftwareprogramm gemäß Definition in Anspruch 7, wobei die Befehle zum Vergleichen der Auflicht- und der Durchlichtbilder Befehle zum Reduzieren der Farbtiefe der Bilder auf 1 Bit beinhalten.

12. Computersoftwareprogramm gemäß Definition in Anspruch 11, wobei die Befehle zum Vergleichen der beiden Bilder Befehle zum Durchführen einer logischen UND-Verknüpfung zwischen einem entsprechenden Pixel von jedem Bild beinhalten.

## Revendications

1. Procédé de détection d'une trace de fission dans un cristal minéral, le procédé consistant à :
capturer la lumière réfléchie par une surface du cristal afin de produire une image numérique de lumière réfléchie ;
imager un plan en face de la surface avec la lumière transmise à travers le cristal afin de produire une image numérique de lumière transmise ; et
comparer l'image de lumière réfléchie à l'image de lumière transmise afin de détecter la trace de fission.

2. Procédé selon la revendication 1, dans lequel l'imagerie du plan en face de la surface du cristal consiste à imager un plan à 0,5 à 2 micromètres en face de la surface du cristal.

3. Procédé selon la revendication 1, dans lequel l'imagerie du plan en face de la surface du cristal consiste à imager un plan à 1,0 micromètre en face de la surface du cristal.

4. Procédé selon l'une quelconque des revendications précédentes, dans lequel la comparaison des images de lumière réfléchie et de lumière transmise afin de détecter la trace de fission consiste à mettre en correspondance un attribut visuel dans l'image de lumière réfléchie avec un attribut visuel dans l'image de lumière transmise ou inversement, les attributs visuels partageant une zone commune.

5. Procédé selon la revendication 1, comprenant l'étape consistant à réaliser une opération ET logique entre des pixels correspondants de l'image de lumière réfléchie et de l'image de lumière transmise.

6. Procédé selon l'une quelconque des revendications précédentes, dans lequel l'imagerie d'un plan en face de la surface du cristal fait intervenir une imagerie avec de la lumière blanche.

7. Programme logiciel informatique pour détecter une trace de fission dans un cristal minéral, le programme comprenant des instructions qui, lorsque le programme est exécuté sur un ordinateur, amènent le programme à réaliser les étapes consistant à :
charger une image de lumière réfléchie produite par la capture de la lumière réfléchie par une surface du cristal ;
charger une image de lumière transmise produite en imageant un plan en face de la surface avec la lumière transmise à travers le cristal ; et
comparer les images de lumière réfléchie et de lumière transmise afin de détecter la trace de fission.

8. Programme logiciel informatique selon la revendication 7, dans lequel l'image de lumière transmise est produite en imageant un plan à 0,5 à 2 micromètres en face de la surface du cristal.

9. Programme logiciel informatique selon la revendication 7, dans lequel l'image de lumière transmise est produite en imageant un plan à 1,0 micromètre en face de la surface du cristal.

10. Programme logiciel informatique selon la revendication 7, dans lequel les instructions pour comparer les images de lumière réfléchie et de lumière transmise comprennent des instructions pour mettre en correspondance un attribut visuel dans l'image de lumière réfléchie avec un attribut visuel dans l'image de lumière transmise ou inversement, les attributs visuels partageant une zone commune.

11. Programme logiciel informatique selon la revendication 7, dans lequel les instructions pour comparer les images de lumière réfléchie et de lumière transmise comprennent des instructions pour réduire la profondeur de couleur des images à 1 bit.

12. Programme logiciel informatique selon la revendication 11, dans lequel les instructions pour comparer les deux images comprennent des instructions pour réaliser une opération ET logique entre un pixel correspondant de chaque image.
